## Europäisches Patentamt

(19) **European Patent Office**

**Office européen des brevets**

(11) Veröffentlichungsnummer: **0 163 889**
**B1**

(12) # EUROPÄISCHE PATENTSCHRIFT

(45) Veröffentlichungstag der Patentschrift:
16.09.87

(51) Int. Cl.⁴: **A 23 G 1/04**, A 23 G 1/12,
B 02 C 4/04

(21) Anmeldenummer: **85104834.8**

(22) Anmeldetag: **21.04.85**

(54) **Drucksteueranlage zur Steuerung des Druckes an den Walzenlagern der Raffinierwalzen von Schokoladenwalzenreibmaschinen.**

(30) Priorität: **10.05.84 IT 2086384**

(43) Veröffentlichungstag der Anmeldung:
**11.12.85 Patentblatt 85/50**

(45) Bekanntmachung des Hinweises auf die Patenterteilung:
**16.09.87 Patentblatt 87/38**

(84) Benannte Vertragsstaaten:
**CH DE IT Li**

(56) Entgegenhaltungen:
**DE - A - 3 016 785**
**DE - B - 1 064 323**
**FR - A - 2 517 219**
**GB - A - 935 363**
**US - A - 3 423 938**

(73) Patentinhaber: **CARLE & MONTANARI S.p.A., Via Neera 39, I-20141 Milano (IT)**

(72) Erfinder: **Ripani, Sergio, Viale G. Da Cermenate 35/A, I-20141 Milano (IT)**
Erfinder: **Serafini, Giulio, via Montemartini 6, I-20139 Milano (IT)**

(74) Vertreter: **de Dominicis, Riccardo et al, de Dominicis & Partners s.a.s. Via Brera, 6, I-20121 Milano (IT)**

## Beschreibung

Vorliegende Erfindung bezieht sich auf eine Drucksteueranlage zur Steuerung des Druckes an den Walzenlagern der Raffinierwalzen von Schokoladenwalzenreibmaschinen.

Bei Schokoladenwalzenreibmaschinen ist es erforderlich, wie an sich bekannt, den Druck an den Walzenlagern der dem Einzugs- bzw. Zufuhrwalzenpaar nachgeschalteten Raffinierwalzen, ändern zu können, um somit mit der gleichen Schokoladenwalzenreibmaschine ein verschiedenes Fettprozent aufweisende Schokoladenteige bzw. -sorten verarbeiten zu können.

In Abhängigkeit von den mit dem jeweiligen Schokoladenteil anzufertigenden Schokoladenerzeugnissen können solche Fettprozente auch merkbar z.B. für Beträge bis zu 4-5% schwanken. Wie an sich bekannt, ermöglicht eine Regelung des Druckes an den Lagern bzw. Kugellagern der Raffinierwalzen in die Plastizität des ausgetragenen Schokoladenfilmes einzugreifen.

Zur Zeit sind zwei verschiedene Methoden bekannt, um die Änderung des Druckes an den Lagerungen der dem Zufuhrwalzenpaar nachgeordneten Raffinierwalzen zu bestimmen.

Gemäss einer ersten Methode ist es möglich, den Druck auf jedes einzelne Walzenpaar zu ändern und somit der Walzenreibmaschine eine maximale Verarbeitungselastizität zu verleihen, die es ermöglicht, die grössten Fettprozentunterschiede aufweisende Schokoladenteige zu verarbeiten.

Zur Durchführung dieser ersten Regelungsweise, die auch «Methode mit verkettetem Mehrfachdruck» benannt wird, wird eine Steueranlage vorgesehen, die für jede Raffinierwalze einen pneumatisch-hydraulischen doppeltwirkenden Druckübersetzer enthält, der an der hydraulischen Seite mit einer den Lagerungen eines Raffinierwalzenpaares zugeordneten hydraulischen Einheit und an der pneumatischen Seite über eine einen Druckregler enthaltende Leitung mit einer gemeinsamen an einer Druckluftquelle angeschlossenen Steigleitung verbunden ist. Eine Drucksteueranlage dieser Art ist der AS-A-3 423 938 entnehmbar. Bei dieser Drucksteueranlage erreicht man durch Betätigen eines Druckreglers eine Druckänderung an den Lagerungen des mit dem betreffenden Anlageteil verbundenen Walzenpaares, wogegen der Druck an den Lagerungen der anderen Raffinierwalzen unverändert bleibt. Die mit dieser Drucksteueranlage versehenen Schokoladenwalzenreibmaschinen sind deshalb dazu geeignet, untereinander verschiedene bzw. für Schokoladenerzeugnisse verschiedenen Typs bestimmte Schokoladenteige zu verarbeiten.

Aus der DE-A-3 016 785 ist ebenfalls eine pneumatische Drucksteueranlage zur Durchführung einer Mehrfachdruckregelung der Stirnlager eines Mehrwalzenwerkes bekannt. Bei dieser Drucksteueranlage sind auf jeder Mehrwalzenwerkseite die Stirnlager eines jedes Walzenpaares durch jeweils eine doppeltwirkende Hydraulik-Kolbenzylinderanordnung miteinander verbunden, deren Kolben an der einen Seite eine Klemm- und an der anderen Seite eine Lösekammer bilden, wobei die Klemmkammern jeweils mit einer individuell fest voreingestellten hydraulischen Druckquelle verbunden, wogegen die Lösekammern an eine einzige regelbare Gegendruckquelle angeschlossen sind.

Wie bei der Drucksteueranlage nach der US-A-3 423 9338 ist es auch bei der aufwendigen Drucksteueranlage nach der DE-A-3 016 785 lediglich möglich, eine Mehrfachdruckregelung durchzuführen.

Die zweite Methode zur Steigerung des Druckes an den Lagerungen der Raffinierwalzen besteht darin, auf alle Lagerungen der dem Zufuhrwalzenpaar nachgeschalteten Raffinierwalzen gleichzeitig einzuwirken, wobei der Druck an den Lagerungen der Austragwalze angelegt und von da auf mechanischem Wege auf die dem Zufuhrwalzenpaar nachgeordneten Raffinierwalzen übertragen bzw. fortgepflanzt wird.

Mit dieser zweiten Regelungsweise, die auch «Methode mit verkettetem Monodruck» benannt wird, kann die Druckregelung auf eine einfachere Weise in bezug auf die Druckregelung mit der Methode «mit verkettetem Mehrfachdruck» durchgeführt werden, jedoch sind diese Walzenreibmaschinen nicht fähig, das Raffinieren von in bezug auf das Fettprozent und auf die Plastizität voneinander abweichenden Schokoladenteigen durchzuführen.

Zur Zeit sind demnach Schokoladenwalzenreibmaschinen bekannt, die eine elastischere Arbeitsweise aufweisen, d.h. die fähig sind, eine Anzahl von Schokoladenteigen zu verarbeiten und die eine recht komplizierte und empfindliche Regelungsweise zur Steuerung der Durckwerte an den Raffinierwalzenlagerungen besitzen sowie Schokoladenwalzenreibmaschinen mit einer einfacheren Druckregelungsweise, die jedoch nur in der Lage sind, untereinander sehr ähnliche Schokoladenteige zu verarbeiten.

Nicht zuletzt aus Kostengründen erschwert diese Sachlage oft die Entscheidung eines Abnehmers in bezug auf die Art der zu wählenden Druckregelungsmethode bzw. die Walzenreibmaschine als solche.

Der vorliegenden Erfindung liegt die Aufgabe zugrunde, eine Drucksteueranlage zur Steuerung des Druckes an den Walzenlagern der Raffinierwalzen von Schokoladenwalzenreibmaschinen zu schaffen, die in der Lage ist, nach Wahl die Verwendung der Arbeitsweise «mit verkettetem Mehrfachdruck» oder die Arbeitsweise «mit verketteten Monodruck», je nach dem jeweiligen zu verarbeitenden Schokoladenteig, und zwar vorteihafterweise mit einer einzigen Umschaltsteuerung frei zu wählen.

Ausgehend von einer Drucksteueranlage mit verkettetem Mehrfachdruck, d.h. enthaltend, für jede dem Einzug- bzw. Zufuhrwalzenpaar nachgeordnete Raffinierwalze, einen pneumatisch-hydraulischen doppeltwirkenden Druckübersetzer, der an der hydraulischen Seite mit einer den Lagerungen eines Paares von Raffinierwalzen zugeordneten hydraulischen Einheit und an der pneumatischen Seite über eine einen jeweiligen Druckregler enthaltende Abzweigleitung mit einer mit einer Druckluftquelle verbundenen gemeinsamen Steigleitung verbunden ist, wird die oben erwähnte Aufgabe dadurch gelöst, dass nach jedem Druckregler der dem Zufuhrwalzenpaar nachgeordneten Raffinierwalzen, und zwar in jeder einen Druckregler einerseits und einen Druck-

2

übersetzer andererseits verbindenden Leitung eine Abzweigungsleitung einer pneumatischen Steueranlage zur gleichzeitigen Druckregelung einmündet, welche Abzweigungsleitung von einem gemeinsamen Sammelbehälter abgeleitet ist, der über einen Druckregler und einen Arbeitsweise-Drehwähler mit einer Druckluftquelle verbunden ist, wobei Mittel zum automatischen Nachfüllen der hydraulischen Flüssigkeit in die hydraulischen Kammern der pneumatisch-hydraulischen Druckübersetzer vorgesehen sind.

Weitere Merkmale der erfindungsgemässen Drucksteueranlage sind den Unteransprüchen entnehmbar.

Eine mit der erfindungsgemässen Drucksteueranlage versehene Schokoladenwalzenreibmaschine kann deshalb je nach dem zu verarbeitenden Schokoladenteig nach freier Entscheidung des Bedienungsmannes entweder nach der Methode mit verkettetem Monodruck oder nach der Methode mit verkettetem Mehrfachdruck gesteuert werden.

Die erfindungsgemässe bifunktionelle Drucksteueranlage macht die damit versehene Schokoladenwalzenreibmaschine zu einer universellen Schokoladenwalzenreibmaschine und weist ferner den Vorteil einer äusserst einfachen Bauweise auf, die einen niedrigen Aufwand an Apparaturen und Leitungen erfordert.

Ein weiterer Vorteil ist in der hohen Zuverlässigkeit der vorgeschlagenen Drucksteueranlage sowie in der einfachen Umschaltbarkeit von der einen zu der anderen Arbeitsweise zu sehen.

Noch ein Vorteil der erfindungsgemässen Drucksteueranlage besteht in der Sicherheit einer vollständigen Nachfüllung mit hydraulischer Flüssigkeit der hydraulischen Kammern der pneumatisch-hydraulischen Druckübersetzer.

Ein weiterer Vorteil besteht darin, dass die erfindungsgemässe Zusatzanlage der Steuerdruckanlage mit verkettetem Mehrfachdruck in der Praxis keinen zusätzlichen Einbauraumbedarf verlangt, so dass diese Zusatzanlage ebenfalls an schon bestehenden und mit einer Drucksteueranlage mit verkettetem Mehrfachdurck versehenen Schokoladenwalzenreibmaschinen ohne weiteres angebaut werden kann.

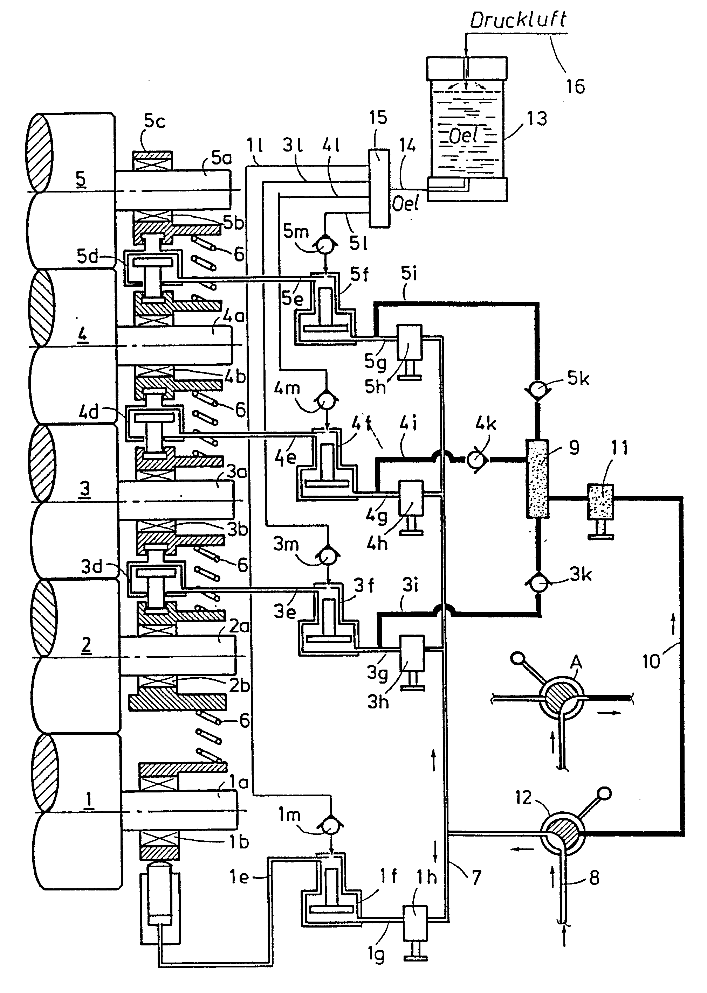

Weitere Vorteile, Einzelheiten und Merkmale der erfindungsgemässen Drucksteueranlage sind ferner der nachfolgenden Beschreibung unter Bezugnahme auf die beigefügte Zeichnung entnehmbar, wobei die einzige Figur eine erfindungsgemässe Drucksteueranlage für die eine Seite einer Schokoladenwalzenreibmaschine schematisch darstellt und wobei die Raffinierwalzer und das Paar von Zufuhrwalzen lediglich teilweise dargestellt sind.

Auf der nicht dargestellten Seite der Walzenreibmaschine wird die erfindungsgemässe Drucksteueranlage genauso gebaut wie die dargestellte Seite.

In der Zeichnung sind mit 1 und 2 die beiden das Einzugs- bzw. Zufuhrwalzenpaar bildenden Walzen bezeichnet, während mit 3, 4 und 5 die eigentlichen Raffinierwalzen bezeichnet sind, wobei die Walze 5 die Austragwalze darstellt.

Der Einfachheit halber wurde der sich zwischen den Walzen befindende Schokoladenfilm nicht näher dargestellt. Die Lagerungsenden der Walzen 1 bis 5 weisen die gleichen Bezugszeichen mit dem Zusatz des Zeichens «a» auf. Die Kugellager der Walzenreibmaschinenwalzen 1 bis 5 weisen das gleiche Bezugszeichen mit dem Zeichen «b» auf, wobei die ortsfesten, d.h. nicht drehbaren Tragteile der genannten Walzenreibmaschinenwalzen das gleiche Bezugszeichen mit dem Zeichen «c» aufweisen. Mit 6 sind die zwischen den ortsfesten Tragteilen angeordneten Federn bezeichnet.

Wie aus der Zeichnung deutlich ersichtlich, ist jeder Raffinierwalze 3, 4 und 5 jeweils eine hydraulische Steuereinheit 3d, 4d und 5d zugeordnet, in die jeweils eine Verbindungsleitung 3e, 4e, 5e einmündet, die am anderen Ende jeweils in die hydraulische Kammer eines pneumatisch-hydraulischen Druckübersetzers 3f, 4f und 5f einmünden. In die pneumatische Kammer dieser pneumatisch-hydraulischen Druckübersetzer 3f, 4f und 5f mündet jeweils eine Leitung 3g, 4g und 5g, die am anderen Ende über einen Druckregler 3h, 4h und 5h in eine gemeinsame Steigleitung 7 münden, die an einer mit einer nicht dargestellten Druckluftquelle in Verbindung stehender Verbindungsleitung 8 angeschlossen ist.

Insoweit handelt es sich um eine an sich bekannte auf das Prinzip des verketteten Mehrfachdruckes arbeitende Drucksteueranlage.

Erfindungsgemäss wird nun eine solche mit verketteter Mehrfachdruckregelung arbeitende Steueranlage wie nachfolgend beschrieben ergänzt, um somit eine bifunktionell arbeitende Drucksteueranlage zu bilden, die wahlweise ebenfalls in der Lage ist, eine verkettete Monodruckregelung zu ermöglichen.

Diese erfindungsgemässe Ergänzung, die mit einer dicken Linie dargestellt ist, sieht für jeden Druckregler 3h, 4h und 5h eine Abzweigungsleitung 3i, 4i und 5i vor, die einerseits in die Verbindungsleitung 3g, 4g und 5g zwischen den genanten Druckreglern 3h, 4h und 5h und den denselben zugeordneten Druckübersetzern 3f, 4f und 5f und andererseits in einen Sammelbehälter 9 einmünden. Eine einen Druckregler 11 enthaltende Verbindungsleitung 10 führt vom genannten Sammelbehälter 9 über einen Arbeitsweise-Drehwähler 12 zu der mit der nicht dargestellten Druckluftquelle verbundenen Verbindungsleitung 8. Wie aus der Zeichnung ersichtlich, wird in jeder Abzweigungsleitung 3i, 4i und 5i jeweils ein Rückschlagventil 3k, 4k und 5k vorgesehen.

Durch Positionierung des Arbeitsweise-Drehwählers 12 in die dargestellte Arbeitslage wird die durch die Verbindungsleitung 8 strömende Druckluft eine Arbeitsweise der vorgeschlagenen Drucksteueranlage gemäss dem Prinzip des «verketteten Mehrfachdruckes» bewirken, d.h. durch Regelungseingriffe auf einen oder mehreren der Druckregler 3h, 4h und 5h wird es möglich sein, den an den Lagerungen der Raffinierwalzen 3, 4 und 5 vorliegenden Druck einzeln zu ändern. Diese Druckregelung bzw. Arbeitsweise wird vorteilhafterweise bei verschiedene Plastizitätswerte bzw. Fettwerte aufweisenden Schokoladenteigen eingesetzt.

Durch Positionierung des Arbeitsweise-Drehwählers in die in der mit A angegebenen Detaildarstellung wiedergegebene Lage wird man dagegen eine Arbeitsweise der vorgeschlagenen Drucksteueranlage gemäss dem Prinzip des «verketteten Monodruckes» bewirken, d.h. durch Regelungseingriffe auf den gemeinsamen Druckregler 11 wird die gleiche Druckänderung bzw. -regelung auf jede der Lagerungen der Raffinierwalzen 3, 4 und 5 bewirkt. Diese Druckregelung bzw. Arbeitsweise wird vorteilhaftterweise bei untereinander ziemlich gleichen Schokoladenteigen eingesetzt.

Bei beiden Arbeitsweisen wird die Druckregelung an den Lagerungen der Walzen 1 des Zufuhrwalzenpaars getrennt, d.h. unabhängig durchgeführt.

Eine mit der Drucksteueranlage versehene Schokoladenwalzenreibmaschine kann somit in der Praxis jeden Schokoladenteig verarbeiten, wobei die Druckregelung der Raffinierwalzen vom Bedienungsmann je nach dem zu verarbeitenden Schokoladenteig gewählt und bestimmt wird, indem er einfach den Arbeitsweise-Drehwähler 12 in die eine bzw. in die andere Arbeitslage betätigt. Nach erfolgter Wahl der jeweils gewünschten Arbeitsweise wird die Druckregelung durch Eingreifen an den Druckreglern 3h, 4h und 5h bei einer Arbeitsweise mit verkettetem Mehrfachdruck oder durch Eingreifen an dem Druckregler 11 bei einer Arbeitsweise mit verkettetem Momodruck erfolgen.

Die mit der erfindungsgemässen Drucksteueranlage versehenen Schokoladenwalzenreibmaschinen stellen deshalb eine Universalschokoladenwalzenreibmaschinen dar.

Um die unvermeidliche Mengenabnahme der hydraulischen Flüssigkeit, vorzugsweise Öl, in den hydraulischen Kammern der Druckübersetzer 3f, 4f und 5f, die auf einen unvermeidlichen auch wenn leichten Flüssigkeitsdurchtritt zurückzuführen sind, auszugleichen, wird erfindungsgemäss ein Behälter 13 für die hydraulische Flüssigkeit vorgesehen, deren Ausgangsleitung 14 in einen Verteiler 15 einmündet, aus dem Speiseleitungen 11, 31, 41 und 51 jeweils in der hydraulischen Kammer eines Druckübersetzers 1f, 3f und 5f einmünden.

Mit 1m, 3m, 4m und 5m, ist ein Rückschlagventil bezeichnet. Im Behälter 13 ist die enthaltene hydraulische Flüssigkeit durch aus der Druckluftzufuhrleitung 16 gespeiste Druckluft unter Druck gehalten. Mit dieser Massnahme ist die Zuverlässigkeit der erfindungsgemässen bifunktionellen Drucksteueranlage äusserst einwandfrei.

Dem Obengesagten ist deutlich entnehmbar, dass mit der erfindungsgemässen Drucksteueranlage die der vorliegenden Erfingung zugrunde gelegte Aufgabe wirksam gelöst wird und die erwähnten Vorteile erreicht werden. Insbesonderes werden die Zuverlässigkeit der Arbeitsweise, die Einfachheit der erfindungsgemässen zusätzlichen Drucksteueranlage, die leichte Umschaltbarkeit sowie die Möglichkeit schon bestehende Schokoladenwalzenreibmaschinen nachträglich mit der erfindungsgemässen zusätzlichen Drucksteueranlage auszurüsten, betont.

Es wird hervorgehoben, dass bei der erfindungsgemässen Drucksteueranlage bei der Arbeitsweise mit verkettetem Monodruck der jeweils geänderte Druckwert jeweils bei jeder einzelnen Lagerung der Raffinierwalzen 3, 4 und 5 vorliegt, und zwar mit genau dem gleichen Wertbetrag, der unabhängig übertragen wird und nicht, wie bei den bekannten mit verkettetem Monodruck arbeitenden Drucksteueranlagen, d.h. durch Druckanlegung an einer Raffinierwalze und Fortpflanzung des Druckes auf mechanischem Wege auf die weiteren Raffinierwalzen.

Alle Einzelteile können in der Praxis durch andere technisch bzw. funktionell gleichwertige Teile ersetzt werden, ohne dadurch den Schutzumfang vorliegender Erfindung zu verlassen.

Alle der Beschreibung, den Ansprüchen und der Zeichnung entnehmbaren Merkmale sind sowohl einzeln als auch in beliebiger Kombination untereinander als erfindungswesentlich zu betrachten.

**Patentansprüche**

1. Drucksteueranlage zur Steuerung des Druckes an den Walzenlagern der Raffinierwalzen von Schokoladenwalzenreibmaschinen enthaltend für jede dem Einzug- bzw. Zufuhrwalzenpaar nachgeordnete Raffinierwalze einen pneumatisch-hydraulischen doppeltwirkenden Druckübersetzer, der an der hydraulischen Seite mit einer den Lagerungen eines Paares von Raffinierwalzen zugeordneten hydraulischen Einheit und an der pneumatischen Seite über eine, einen jeweiligen Druckregler enthaltende Abzweigleitung mit einer mit einer Druckluftquelle verbundenen gemeinsamen Steigleitung verbunden ist, dadurch gekennzeichnet, dass nach jedem Druckregler (3h, 4h, 5h) der dem Zufuhrwalzenpaar (1, 2) nachgeordneten Raffinierwalzen (3, 4, 5), und zwar in jeder einen Druckregler (3h, 4h, 5h) einerseits und einen Druckübersetzer (3f, 4f, 5f) andererseits verbindenden Leitung (3g, 4g, 5g) eine Abzweigungsleitung (3i, 4i, 5i) einer pneumatischen Steueranlange zur gleichzeitigen Druckregelung einmündet, welche Abzweigungsleitung (3i, 4i, 5i) von einem gemeinsamen Sammelbehälter (9) abgeleitet ist, der über einen Druckregler (11) und einen Arbeitsweise-Drehwähler (12) mit einer Druckluftquelle verbunden ist, wobei Mittel zum automatischen Nachfüllen der hydraulischen Flüssigkeit in die hydraulischen Kammern der pneumatischen-hydraulischen Druckübersetzer (3f, 4f, 5f) vorgesehen sind.

2. Drucksteueranlage nach Anspruch 1, dadurch gekennzeichnet, dass in jeder Abzweigungsleitung (3i, 4i, 5i) zwischen dem gemeinsamen Sammelbehälter (9) einerseits und jeweils einer einen Druckregler (3h, 4h, 5h) und einen Druckübersetzer (3f, 4f, 5f) verbindenden Leitung (3g, 4g, 5g) andererseits ein Rückschlagventil (3k, 4k, 5k) eingeschaltet ist.

3. Drucksteueranlage nach Anspruch 1 und 2, dadurch gekennzeichnet, dass die genannten Mittel zum automatischen Nachfüllen der hydraulischen Flüssigkeit der Druckübersetzer (1f, 3f, 4f und 5f) in einem Behälter (13) der hydraulischen Flüssigkeit besteht, der mit einem Verteiler (15) verbunden ist, aus dem (15) jeweils eine Verbindungsleitung (11, 31, 41 und 51) den genannten Verteiler (15) mit jeweils die hydraulische Kammer eines Druckübersetzers (1f, 3f, 4f und 5f) verbindet, wobei in die genannten Verbindungsleitungen (11, 31, 41 und 51) jeweils ein Rückschlagventil (1m, 3m, 4m und 5m) eingeschaltet ist.

4. Drucksteueranlage nach Anspruch 1, dadurch gekennzeichnet, dass der Arbeitsweise-Drehwähler (22) in der einen Arbeitslage die mit der Druckluftquelle verbundene Verbindungsleitung (8) mit der Steigleitung (7) des der verketteten Mehrfachdruckregelung dienenden Anlageteils verbindet, während der genannte Arbeitsweise-Drehwähler (12) in der anderen Arbeitslage die genannte Verbindungsleitung (8) mit der gemeinsamen Verbindungsleitung (10) des der verketteten Monodruckregelung dienenden Anlageteils verbindet.

5. Schokoladenwalzenreibmaschine, dadurch gekennzeichnet, dass dieselbe mit einer bifunktionellen Drucksteueranlage zur Steuerung des Druckes an den Raffinierwalzenlagern nach Anspruch 1 bis 4 versehen ist.

**Claims**

1. A control system for controlling the pressure on chocolate refining machine roller bearings, comprising, for each refining roll located downstream of the feeding roll pair, a double-acting hydraulic-pneumatic pressure step-up device which is connected, with its hydraulic side, to a hydraulic unit associated with the bearings on one refining roll pair, and with its pneumatic side, through a branch line containing a respective pressure regulator, to a common riser associated with a source of compressed air, characterized in that, downstream of each pressure regulator (3h, 4h, 5h) for the refining rolls (3, 4, 5) located downstream of the feeding roll pair (1, 2), into each branch line included between one pressure regulator (3h, 4h, 5h) and a pressure step-up device (3f, 4f, 5f), there opens a branch line (3i, 4i, 5i) from a pneumatic circuit of simultaneous adjustment extending from a common manifold (9) connected with the interposition of a pressure regulator (11) to the source of compressed air through an operating mode selector valve (12), also provided being a means of automatically topping up the haudraulic fluid in the hydraulic chambers of the hydraulic-pneumatic pressure step-up devices (3f, 4f, 5f).

2. A system according to Claim 1, characterized in that a check valve (3k, 4k, 5k) is provided in each branch line (3i, 4i, 5i) between the common manifold (9) on the one side and that branch line (3g, 4g, 5g) which is included between one pressure regulator (3h, 4h, 5h) and one pressure step-up device (3f, 4f, 5f) on the other side.

3. A system according to Claims 1 and 2, characterized in that said means of topping up the hydraulic fluid in the pressure step-up devices (1f, 3f, 4f and 5f) consists of a hydraulic fluid reserve (13) opening into a distributor (15) whence a connection line (11, 31, 41 and 51) connects said distributor (15) to a hydraulic chamber of said pressure step up devices (1f, 3f, 4f and 5f), said connecting lines (11, 31; 41 and 51) having a check valve (1m, 3m, 4m and 5m) mounted therein.

4. A system according to Claim 1, characterized in that the operating mode selector valve (12) connects, at one position thereof, the branch line (8) connected to the compressed air source to the riser (7) of the system portion providing linked multi-pressure control, whereas with the operating mode selector valve (12) at the other of its positions, said branch line (8) is connected to the common conduit (10) of the system portion which provides linked single-pressure control.

5. Chocolate refining machine, characterized in that the same is equipped with a bifunctional control system for controlling the pressure on refining rolls according to Claims 1-4.

**Revendications**

1. Dispositif pour le réglage de la pression des supports des cylindres d'affinage dans des broyeurs cylindriques à chocolat contenant, pour chaque cylindre d'affinage suivant la paire de cylindres d'introduction ou respectivement d'alimentation, un intensificateur de pression pneumatique-hydraulique à double action, qui est relié, du côté hydraulique, à une unité hydraulique affectée aux paliers d'une paire de cylindres d'affinages et du côté pneumatique, par une conduite de dérivation contenant un régulateur de pression, à un branchement commun relié à une source d'air comprimé, caractérisé en ce qu'après chaque régulateur de pression (3h, 4h, 5h) du cylindre d'affinage (3, 4, 5) suivant la paire de cylindres d'alimentation (1, 2) et effectivement dans chaque conduite reliant un régulateur de pression (3h, 4h, 5h) d'une part et un intensificateur de pression (3f, 4f, 5f) d'autre part, débouche une conduite en dérivation (3i, 4i, 5i) d'un dispositif de réglage pneumatique pour la régulation simultanée de la pression, laquelle conduite de dérivation (3i, 4i, 5i) part d'un récipient collecteur commun (9), qui est relié, par un régulateur de pression (11) et un sélecteur rotatif du mode de fonctionnement (12), à une source d'air comprimé, des moyens étant prévus pour le remplissage automatique du liquide hydraulique dans les chambres hydrauliques des intensificateurs de pression pneumatique-hydraulique (3f, 4f, 5f).

2. Dispositif pour le réglage de la pression selon la revendication 1 caractérisé en ce qu'un clapet anti-retour (3k, 4k, 5k) est inséré dans chaque dérivation (3k, 4i, 5i) entre le récipient collecteur commun (9) d'une part et une conduite (3g, 4g, 5g) d'autre part reliant un régulateur de pression (3h, 4h, 5h) et un intensificateur de pression (3f, 4f, 5f).

3. Dispositif pour la réglage de la pression selon la revendication 1 et 2, caractérisé en ce que lesdits moyens pour le remplissage automatique du liquide hydraulique des intensificateurs de pression (1f, 3f, 4f et 5f) se composent d'un récipient (13) du liquide hydraulique qui est relié à un distributeur (15) duquel (15) une conduite de liaison (11, 31, 41 et 51) relie ledit distributeur (15) à la chambre hydraulique d'un intensificateur de pression (1f, 3f, 4f et 5f), et dans lesdites conduites de liaison (11, 31, 41 et 51) est inséré un clapet anti-retour (1m, 3m, 4m et 5m).

4. Dispositif pour le réglage de la pression selon la revendication 1 caractérisé en ce que le sélecteur rotatif de mode de fonctionnement (12) relie, dans une position de fonctionnement, la conduite de liaison (8) reliée à la source d'air comprimé au branchement (7) de la pièce servant à la régulation à pression multiple composée tandis que ledit sélecteur rotatif de mode de fonctionnement, à son autre position de fonctionnement, relie ladite conduite de liaison (8) à la conduite de liaison commune (10) de la pièce servant à la régulation monopression composée.

5. Broyeur cylindrique à chocolat caractérisé en ce qu'il est pourvu d'un dispositif pour le réglage de la pression bifonctionnel pour le réglage de la pression des supports des cylindres d'affinage selon les revendications 1 à 4.

Druckluft